# EUROPÄISCHE PATENTSCHRIFT

(11) **EP 0 995 585 B1**
(45) Veröffentlichungstag und Bekanntmachung des Hinweises auf die Patenterteilung: **31.07.2002**
(21) Anmeldenummer: 99120218.5
(22) Anmeldetag: 09.10.1999
(51) Int. Cl.: B29D 30/56, B29D 30/54

(54) **Verfahren zur Wiederherstellung von Fahrzeugreifen sowie hierzu geeignetes Formteil**
Process and mould for recovering a vehicle tyre
Procédé et moule pour récupérer un pneu de véhicule

(30) Priorität: 22.10.1998 DE 19848650
(43) Veröffentlichungstag der Anmeldung: 26.04.2000
(73) Patentinhaber: Reifen Ihle GmbH, 89302 Günzburg (DE)
(72) Erfinder: Ihle, Gerhardt, 89312 Günzburg (DE); Aschenbrenner, Alfred, 89312 Günzburg (DE)
(74) Vertreter: Munk, Ludwig, Dipl.-Ing.

(56) Entgegenhaltungen:
- DE-A- 2 046 107
- GB-A- 2 277 061
- US-A- 3 541 644
- US-A- 4 653 992
- US-A- 5 098 268

## Beschreibung

Die Erfindung betrifft ein Verfahren zur Wiederherstellung von Fahrzeugreifen, die im Bereich wenigstens einer an einer zugeordneten Felge in dichtende Anlage bringbaren Wulst beschädigt sind und deren Lauffläche abgefahren ist, durch Reparatur der Wulstbeschädigung und Runderneuerung der Lauffläche, und geht weiter auf ein zur Reparatur der Wulstbeschädigung geeignetes Formteil.

Bei der Montage bzw. Demontage von Fahrzeugreifen kommt es erfahrungsgemäß häufig zu einer Beschädigung der in dichtende Anlage an der Felge bringbaren Wulst durch die Montagewerkzeuge. Derartige Beschädigungen können die Dichtwirkung beeinträchtigen. Aus diesem Grund werden die Reifenkarkassen vor einer Runderneuerung der Lauffläche auch auf Gummiverletzungen im Wulstbereich untersucht. Sofern solche Beschädigungen festgestellt werden, müssen diese so repariert werden, dass eine zuverlässige Dichtwirkung gewährleistet ist. Hierzu werden die Wulstbeschädigungen bisher nach einer geeigneten Ausarbeitung mit einer Kautschukmischung ausgefüllt, die anschließend unabhängig von der Runderneuerung der Lauffläche unter Verwendung spezieller Wulstvulkanisiergeräte, die örtlich anbringbar sind, vulkanisiert wird, siehe dazu Dokument GB-A-2 277 061 und das einleitende Teil des Anspruchs 1. Danach wird die übliche Runderneuerung durchgeführt. Eine Kombination der beiden Verfahren ist bisher nicht möglich. Die bisherige Arbeitsweise erweist sich daher als sehr umständlich und nicht wirtschaftlich genug. Hinzu kommt, dass die bisher zur Verfügung stehenden Wulstvulkanisiergeräte zwar universell verwendbar, aber nicht individuell an die zu reparierende Wulst angepasst sind, so dass auch die erzielbare Genauigkeit nicht der eines Neureifens entspricht, was den Gebrauchswert eines so reparierten Reifens beeinträchtigen kann.

Hiervon ausgehend ist es daher die Aufgabe der vorliegenden Erfindung, ausgehend vom eingangs geschilderten Stand der Technik die Wirtschaftlichkeit zu verbessern und den Reifen-Gebrauchswert zu erhöhen.

Die verfahrensmäßige Lösung dieser Aufgabe besteht darin, dass für die Runderneuerung der Lauffläche und die Reparatur der Wulstbeschädigung ein gemeinsamer Vulkanisationsvorgang durchgeführt wird, wobei die beschädigte, ausgearbeitete Stelle der Wulst mit einer Kautschukmischung ausgelegt wird und dann an die Wulst ein diese umfassendes, zumindest über einen Teil ihres Umfangs sich erstreckendes Formteil angelegt wird, das eine dem Querschnitt der unbeschädigten Wulst individuell angepasste Innenkontur aufweist, und wobei anschließend der laufflächenseitig mit einem neuen Laufstreifen belegte Reifen mit dem wulstseitig angelegten Formteil für die Vulkanisation in eine Aufnahmeeinrichtung eingebracht wird, die sich an den Reifen und das Formteil anlegt und dieses fixiert.

Mit diesen Maßnahmen werden die eingangs geschilderten Nachteile vollständig vermieden. Dadurch, dass nur ein Vulkanisationsvorgang durchgeführt werden muss, ergibt sich eine starke Vereinfachung und Verkürzung der Gesamt-Wiederherstellungszeit. Gleichzeitig werden die Genauigkeit und Haltbarkeit der Wulstreparatur verbessert, was sich vorteilhaft auf die erzielbare Verkehrssicherheit auswirkt.

Das zur Wulstreparatur verwendete Formteil ist als umlaufender Ring ausgebildet, der einen etwa V-förmigen, die Wulst umfassenden Querschnitt aufweist. Die Verwendung eines umlaufenden Rings erleichtert dessen Anbringung und Fixierung. Dadurch, dass der umlaufende Ring aus gummielastischem Material besteht, besitzt dieser einerseits soviel Elastizität, dass er leicht und einfach montierbar und demontierbar ist, und andererseits so viel Festigkeit, dass er einer während der Vulkanisation notwendigen Druckbelastung nicht ausweicht und dementsprechend die in die Reparaturstelle eingelegte Kautschukmischung nicht wegdrückt.

Vorteilhaft kann das Formteil als aus einer Kautschukmischung bestehender Vulkanisationsformling ausgebildet sein, der unter Verwendung eines unbeschädigten Reifens als Matrize hergestellt ist. Diese Maßnahmen ergeben eine einfache und kostengünstige Herstellbarkeit des Formteils und gewährleisten gleichzeitig auf einfache und kostengünstige Weise eine individuelle Anpassung der Innenkontur des Formteils an die gewünschte Wulstkontur.

Weitere vorteilhafte Ausgestaltungen und zweckmäßige Fortbildungen der Erfindung sind in den restlichen Unteransprüchen angegeben und aus der nachstehenden Beispielsbeschreibung an Hand der Zeichnung näher entnehmbar.

In der nachstehend beschriebenen Zeichnung zeigen:
- Figur 1: einen Querschnitt durch einen eingehüllten, für eine Kaltrunderneuerung vorgesehenen Reifen und
- Figur 2: einen Teilquerschnitt durch einen in eine Vulkanisationsform eingelegten, für eine Heißrunderneuerung vorgesehenen Reifen.

Der grundsätzliche Aufbau von Fahrzeugreifen und die verschiedenen Möglichkeiten einer Runderneuerung sind an sich bekannt und bedürfen daher im vorliegenden Zusammenhang keiner ausführlicheren Erläuterung mehr. Bei der Runderneuerung wird der auf einer Karkasse aufgenommene, ein Stahlgürtelpaket enthaltende Gummibelag eines Reifens zumindest im Bereich der profilierten Lauffläche, die im Fahrbetrieb verschleißt, bis etwa auf das Niveau des Stahlgürtelpakets abgearbeitet und durch einen neuen Laufstreifen ersetzt.

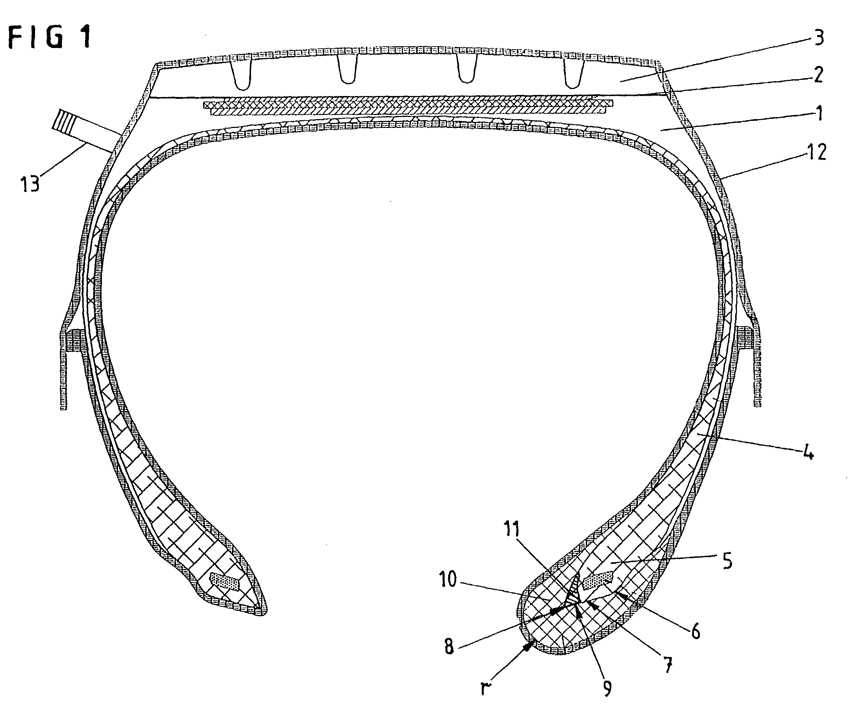

Bei dem der Figur 1 zu Grunde liegenden, für eine in einem Autoklaven durchzuführende, sogenannte Kaltrunderneuerung vorgesehenen Reifen sind auf den laufflächenseitig abgearbeiteten, ursprünglichen Gummibelag 1 eine Bindegummischicht 2 und darauf ein vorvulkanisierter, profilierter Laufstreifen 3 aufgebracht. Die den Gummibelag aufnehmende Karkasse 4 läuft beidseitig in eine einen Stahlkern enthaltende Wulst 5 aus, mit welcher der Reifen gegen eine ihn aufnehmende Felge abdichten soll. Hierzu besitzt die Wulst 5 eine an eine nach außen weisende Wulstferse 6 sich anschließende, im wesentlichen ebene Wulstsohle 7, die mit der inneren Wulsflanke eine in einem spitzen Winkel auslaufende Wulstzehe 8 bildet. Im Bereich der Wulst 5 können Beschädigungen vorhanden sein, wie in Figur 1 bei 9 angedeutet ist. Derartige Beschädigungen werden in der Regel dadurch verursacht, dass bei der Montage bzw. Demontage des Reifens die Montagewerkzeuge den nur natürliche Festigkeiten aufweisenden Wulstgummi verletzen.

Die in Figur 1 beschädigte, rechte Wulst 5 ist von einem zweischenkligen, im Querschnitt etwa V-förmigen Formteil 10 umfasst. Die Innenkontur des Formteils 10 entspricht dem Querschnitt der unbeschädigten Wulst 5. Die beiden Schenkel des Formteils 10 sind zu ihrem freien Ende hin stetig verjüngt, so dass sich ein stufenloser Übergang zur Reifenoberfläche ergibt. Das Formteil 10 ist zweckmäßig als umlaufender Ring ausgebildet, der die Wulst 5 auf ihrem gesamten Umfang umfasst, so dass sich auch in Umfangsrichtung keine Stufe ergibt. Sofern das Formteil 10 nicht umlaufen sollte, läuft sein Querschnitt im Bereich seiner Enden stetig sich verjüngend aus. Der das Formteil 10 bildende, umlaufende Ring besteht aus gummielastischem Material. Hierdurch wird erreicht, dass der umlaufende Ring vergleichsweise leicht und einfach an der zugeordneten Wulst in Stellung gebracht bzw. hiervon abgenommen werden kann.

Die im Bereich der Wulst 5 vorhandene Beschädigung 9 wird vor dem Anlegen des Formteils 10 mittels geeigneter Werkzeuge so ausgearbeitet, dass sich eine durch einen Vulkanisationsprozess mit Gummi verbindende Oberfläche ergibt. Anschließend wird die beschädigte Stelle mit einer Kautschukmischung verfüllt, d.h. der fehlende Gummi wird durch neuen Gummi ersetzt. Die eingebrachte Verfüllung 11 wird durch das Formteil 10 an der gewünschten Stelle gehalten und in die gewünschte, der Innenkontur des Formteils 10 entsprechende Form, die der Kontur der unbeschädigten Wulst 9 entspricht, gepresst. Um zu verhindern, dass sich die die Verfüllung 11 bildende Kautschukmischung bei der Vulkanisation mit dem aus gummielastischem Material bestehenden Formteil 10 verbindet, kann das Formteil 10 im Bereich seiner Innenoberfläche vor dem Anlegen mit einem Formtrennmittel behandelt sein. Es ist aber auch möglich, einfach die äußerste Oberfläche der Verfüllung 11 vor dem Anlegen des Formteils 10 mit einem Trennmehl etc. zu bestäuben.

Zur Fixierung des Laufstreifens 3 und des der mit einer Kautschukmischung verfüllten Wulstbeschädigung 9 zugeordneten Formteils 10 ist eine hier aus zwei mit ihren einander zugewandten Rändern einander überlappenden Teilen bestehende, den gesamten Reifen samt Laufstreifen 3 und Formteil 10 einhüllende Einhüllung 12 angebracht. Diese ist mit Ventilen 13 zum Absaugen ihres Innenraums versehen. Auf Grund des so im Innenraum der Einhüllung 12 erzeugbaren Unterdrucks legt sich die Einhüllung 12 unter der Wirkung des Umgebungsdrucks strumpfartig an den von ihr eingeschlossenen Körper an, wodurch hier der Laufstreifen 3 und das Formteil 10 fixiert werden. Das Formteil 10 sorgt dabei dafür, dass die von ihm in die beschädigte Stelle der Wulst 5 hineingepresste Verfüllung 11 unter der Wirkung des von der Umhüllung 12 ausgeübten Drucks nicht in unerwünschter Weise deformiert bzw. aus der die beschädigte Stelle 9 bildenden Vertiefung weggedrückt werden kann. Die Verfüllung 11 erhält die vom Formteil 10 vorgegebene Oberflächenkontur, die der einer unbeschädigten Wulst entspricht.

Zweckmäßig ist das Formteil 10 daher in seinem seine beiden Schenkel verbindenden Bereich, der den gefährdeten Wulstbereich umfasst, so dick, dass sich auf Grund des von der Umhüllung 12 ausgeübten Drucks keine unerwünschte Deformation ergeben kann. Die Außenkontur des die seitlichen Schenkel miteinander verbindenden Bereichs ist hier, wie in Figur 1 durch r angedeutet ist, abgerundet, so dass sich die Einhüllung 12 sauber anlegen kann.

Der in der oben geschilderten Weise vorbereitete Reifen wird zur Vulkanisation der Bindegummischicht 2 und der Verfüllung 11 und dementsprechend zum Verbinden des ursprünglichen Gummibelags 1 mit dem neuen Laufstreifen 3 und zur Reparatur der Wulstbeschädigung 9, in einen hier nicht näher dargestellten Autoklaven eingelegt, dessen Innenraum mit dem für die Vulkanisation erforderlichen Druck von bis zu 6 bar beaufschlagbar und auf eine Temperatur von etwa 100° C heizbar ist. Bei diesen Bedingungen findet eine Vulkanisation statt, wodurch, wie schon erwähnt, der Laufstreifen 3 mit dem ursprünglichen Gummibelag 1 und die Verfüllung 11 mit dem sie umgebenden Wulstgummi verbunden werden. Nach erfolgter Vulkanisation und Abnahme der Einhüllung 12 sowie Entfernung des Formteils 10 liegt ein laufflächenseitig runderneuerter und wulstseitig reparierter Reifen vor, dessen Gebrauchswert praktisch dem eines Neureifens entspricht.

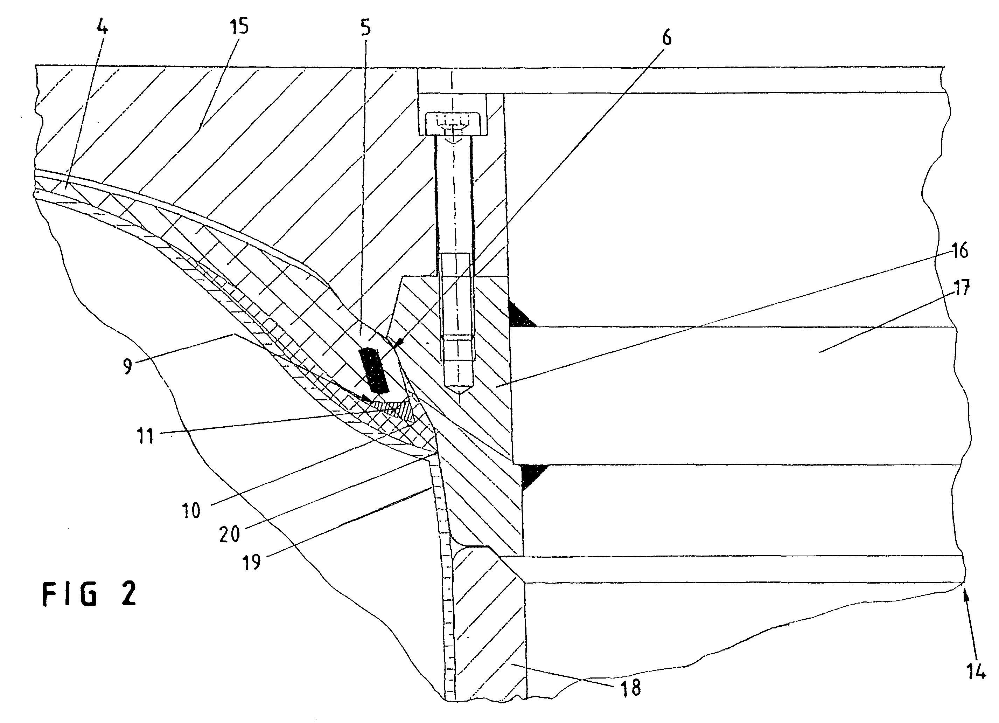

Der Figur 2 liegt ein Beispiel mit sogenannter Heißrunderneuerung zu Grunde. Dabei findet ein roher, d.h. noch nicht vorvulkanisierter, unprofilierter Laufstreifen Verwendung, der bei der Runderneuerung vulkanisiert und so ohne Bindegummischicht mit dem ursprünglich vorhandenen Gummibelag verbunden wird. Hierzu wird der Reifen in eine als Ganzes mit 14 bezeichnete Form eingelegt, deren Formhohlraum laufflächenseitig ein Negativprofil aufweist, an das der Laufstreifen angedrückt wird und das dementsprechend in diesem abgeformt wird. Die Form 14 besitzt zwei im Bereich der Lauffläche aneinander anschließende, beheizbare Teile 15, die über dem Umfang in mehrere Segmente unterteilt sein können. Die beiden Formteile 14 sind in dem der Wulst 5 der Karkasse 4 des Reifens zugeordneten Bereich mit einem austauschbaren Wulstring 16 versehen, der durch eine Verstrebung 17 versteift sein kann.

Die einander gegenüberliegenden Wulstringe 16 der ein Oberteil bzw. Unterteil bildenden Formteile 15 sind durch eine ringförmige Nabe 18 überbrückt. An dieser und an den benachbarten Bereichen der Wulstringe 16 stützt sich ein Blähschlauch 19 ab, dessen Innenraum mit einem heißen Druckmittel, beispielsweise heißem Wasser, beaufschlagbar ist. Unter der Wirkung des vom Blähschlauch 19 ausgeübten Drucks wird der Reifen mit seiner Außenkontur an die Wand des Formhohlraums angelegt, wobei der im Bereich der Lauffläche angebrachte neue Laufstreifen fixiert und zur Profilierung in das formseitig vorgesehene Profil hineingepresst wird.

Im Falle einer Wulstbeschädigung wird die beschädigte Stelle, wie beim obigen Beispiel, ausgearbeitet und mit einer Kautschukmischung so verfüllt, dass die fehlende Gummimasse ersetzt wird. Im Bereich der beschädigten Wulst 5 ist, wie beim obigen Beispiel, ein den gefährdeten Bereich der Wulst 5 umfassendes, im Querschnitt etwa V-förmiges Formteil 10 vorgesehen, durch welches die im Bereich der beschädigten Stelle 9 angebrachte Verfüllung 11 in die gewünschte Form gebracht und fixiert wird. Das Formteil 10 ist auch hier zweckmäßig als aus gummielastischem Material bestehender, umlaufender Ring ausgebildet.

Sofern es erwünscht ist, dass die Wulst 5 mit ihrer Wulstferse 6 in eine zugeordnete Kontur der Form 14 eingreift, ist der äußere Schenkel des Formteils 10 gegenüber dem inneren Schenkel, an dem der Blähschlauch 19 anliegt, so verkürzt, dass er an der Wulstferse 6 endet. Die Außenkontur des kürzeren, äußeren Schenkels des Formteils 10 entspricht der zugeordneten Innenkontur des Wulstrings 16. Durch den äußeren Schenkel des Formteils 10 wird die Wulst 5 von der zugeordneten Wand des Wulstrings 16 leicht abgehoben. Die Dicke des äußeren Schenkels des Formteils 10 wird dementsprechend so gewählt, dass die hierdurch bewirkte Verformung der Wulst 5 im Elastizitätsbereich liegt und daher unschädlich ist. Die beiden Schenkel des Formteils 10 sind, wie beim obigen Beispiel, zu ihren freien Enden hin stetig verjüngt, so dass sich ein stufenloser Übergang ergibt.

Das im Bereich der beschädigten Wulst angebrachte Formteil 10 wird durch den am inneren Schenkel anliegenden Blähschlauch 19 in satter Anlage an den zugeordneten Wandbereichen der Wulst 5 und der Form 14 gehalten und so in seiner Lage fixiert. Um zu verhindern, dass das Formteil 14 vom Blähschlauch 19 von der zugeordneten Formoberfläche weggedrückt werden kann, schließt die Außenkontur des inneren Schenkels des Formteils 10 mit einem spitzen oder rechten Winkel an die Außenkontur des äußeren Schenkels an, wie in Figur 2 bei 20 angedeutet ist. Unter der Wirkung des vom Blähschlauch 19 ausgeübten Drucks und der durch Beheizung des Druckmittels und der Form 14 aufgebrachten Temperatur vulkanisieren der Laufstreifen und die im Bereich der Wulstbeschädigung 9 angebrachte Verfüllung 10, so dass nach Öffnen der Form 14 ein runderneuerter und im Bereich der beschädigten Wulst 5 reparierter Reifen vorliegt.

Die den Figuren 1 und 2 zu Grunde liegenden Formteile 10 werden zweckmäßig unter Verwendung eines wulstseitig unbeschädigten Reifens als Matrize hergestellt. Hierzu wird der unbeschädigte Reifen im Bereich seiner Wulst in eine Kautschukmischung eingepackt, die zweckmäßig zumindest teilweise aus Butyl- und/oder Silikonkautschuk besteht. Zur Herstellung des der Figur 1 zu Grunde liegenden Formteils wird anschließend die Einhüllung 12 angelegt und der Vulkanisationsprozess durchgeführt. Zur Herstellung des der Figur 2 zu Grunde liegenden Formteils 10 wird der Reifen mit der eingepackten Wulst in eine Form der bei 14 angedeuteten Art eingebracht und mit Hilfe eines Blähschlauchs 19 fixiert, wobei ebenfalls der Vulkanisationsprozess durchgeführt wird.

Nach Beendigung des Vulkanisationsprozesses liegt das fertige Formteil 10 vor, dessen Innenkontur dem Querschnitt der unbeschädigten Wulst entspricht. Für Reifen mit unterschiedlicher Wulstkontur werden unterschiedliche Formteile benötigt. Deren Herstellung als Vulkanisationsformling ist jedoch für einen Vulkanisationsbetrieb problemlos zu bewerkstelligen. Durch die Abformung einer unbeschädigten Wulst mit Hilfe der auch bei der Wulstreparatur verwendeten Fixiermittel in Form der Einhüllung 12 bzw. der Form 14 mit Blähschlauch 19 erhält nicht nur die Innenkontur des Formteils 10 die gewünschte Form, sondern auch die Außenseite eine optimale Kontur, die ohne nennenswerte Nacharbeit brauchbar ist. Um zu verhindern, dass sich das herzustellende Formteil 10 bei der Vulkanisation mit dem als Matrize fungierenden Reifen verbindet, kann dieser im Wulstbereich mit einem Formentrennmittel behandelt werden. In der Regel ist dies jedoch nicht nötig, da die übliche Reifenverschmutzung als Trennmittel fungiert. Selbstverständlich wäre es auch denkbar, zur Herstellung des Formteils ein Formwerkzeug vorzusehen. Dies kann eine Serienfertigung erleichtern.

## Patentansprüche

1. Verfahren zur Wiederherstellung von Fahrzeugreifen, die im Bereich wenigstens einer an einer zugeordneten Felge in dichtende Anlage bringbaren Wulst (5) beschädigt sind und deren Lauffläche abgefahren ist, durch Reparatur der Wulstbeschädigung (9) und Runderneuerung der Lauffläche, **dadurch gekennzeichnet, daß** für die Runderneuerung der Lauffläche und die Reparatur der Wulstbeschädigung (9) ein gemeinsamer Vulkanisationsvorgang durchgeführt wird, wobei die beschädigte, ausgearbeitete Stelle der Wulst (5) mit einer Kautschukmischung ausgelegt wird und dann an die Wulst (5) ein diese umfassendes, zumindest über einen Teil ihres Umfangs sich erstreckendes Formteil (10) angelegt wird, das eine dem Querschnitt der unbeschädigten Wulst (5) individuell angepasste Innenkontur aufweist, und wobei anschließend der laufflächenseitig mit einem neuen Laufstreifen (3) belegte Reifen mit dem wulstseitig angelegten Formteil (10) für die Vulkanisation in eine Aufnahmeeinrichtung (12;14,19) eingebracht wird, die sich an den Reifen und das Formteil (10) anlegt und dieses fixiert.

2. Verfahren nach Anspruch 1, **dadurch gekennzeichnet, daß** für die Kaltrunderneuerung, bei der auf den vorbereiteten Reifen ein vorvulkanisierter Laufstreifen (3) aufvulkanisiert wird, der Reifen mit angelegtem Laufstreifen (3) und angelegtem Formteil (10) in einer Einhüllung (12), deren Innenraum abgesaugt wird, eingehüllt und so in einen Autoklaven eingebracht wird.

3. Verfahren nach Anspruch 1, **dadurch gekennzeichnet, daß** bei der Heißrunderneuerung, bei der ein roher Laufstreifen Verwendung findet, der durch Anpressen an eine Form (14) profiliert wird, der mit dem Laufstreifen belegte Reifen mit angelegtem Formteil (10) in die beheizbare Form (14) eingebracht und mit dem Formteil (10) mittels eines heizbaren Blähschlauchs (19) an die Innenoberfläche der Form (14) angepresst wird.

4. Verfahren nach einem der vorhergehenden Ansprüche, **dadurch gekennzeichnet, daß** das Formteil (10) vor dem Anlegen an die beschädigte Wulst (5) zumindest im Bereich seiner Innenoberfläche mit einem Formtrennmittel behandelt wird.

5. Formteil zur Durchführung des Verfahrens nach einem der vorhergehenden Ansprüche, **dadurch gekennzeichnet, daß** es als umlaufender Ring ausgebildet ist, der einen etwa V-förmigen, die Wulst (5) umfassenden Querschnitt aufweist.

6. Formteil nach Anspruch 5, **dadurch gekennzeichnet, daß** es aus gummielastischem Material besteht.

7. Formteil nach Anspruch 6, **dadurch gekennzeichnet, daß** es als aus einer vorzugsweise zumindest teilweise aus Butyl- und /oder Silikonkautschukk bestehenden Kautschukmischung bestehender Vulkanisationsformling ausgebildet ist, der unter Verwendung eines Reifens mit unbeschädigter Wulst (5) als Matrize hergestellt ist.

8. Formteil nach einem der vorhergehenden Ansprüche 5 bis 7, **dadurch gekennzeichnet, daß** es für die Kaltrunderneuerung eine im Übergangsbereich seiner beiden Schenkel außen abgerundete Kontur (r) aufweist.

9. Formteil nach einem der vorhergehenden Ansprüche 5 bis 7, **dadurch gekennzeichnet, daß** es für die Heißrunderneuerung im Übergangsbereich seiner beiden Schenkel eine unter einem höchstens rechten Winkel (20) abgewinkelte Außenkontur aufweist.

10. Formteil nach Anspruch 9, **dadurch gekennzeichnet, daß** es für die Heißrunderneuerung einen gegenüber dem inneren Schenkel verkürzten, äußeren Schenkel aufweist, der eine der Innenkontur des Wulstrings (16) der Form (14) angepasste Außenkontur aufweist und im Bereich der Wulstferse (6) endet.

## Claims

1. A method for remanufacturing vehicle tires which are damaged in the region of at least one bead (5), which may be put onto an assigned wheel rim to form a seal, and whose running surface is bald, by repairing the bead damage (9) and retreading the running surface, **characterized in that** a joint vulcanization procedure is used for retreading the running surface and repairing the bead damage (9), with the damaged, worn location of the bead (5) being laid out with a rubber mixture and then a molded part (10), which encloses the bead and extends around at least a part of its circumference, being applied to the bead (5), the molded part having an inner contour individually tailored to the cross-section of the undamaged bead (5), and with the tire, which is covered on the running surface side with a new tread (3), subsequently being inserted, with the molded part (10) applied to the bead side, in a receiving device (12; 14, 19), which applies itself to the tire and the molded part (10) and fixes them.

2. A method according to claim 1, **characterized in that** for cold retreading, in which a pre-vulcanized tread (3) is vulcanized onto the prepared tires, the tires, with the tread (3) and molded part (10) applied, are enveloped in an envelope (12) whose inside is suctioned out and are inserted in an autoclave in this state.

3. A method according to claim 1, **characterized in that** for hot retreading, in which a raw tread is used, which is profiled by being pressed on a mold (14), the tire covered with the tread is inserted with the applied molded part (10) into the heatable mold (14) and is pressed with the molded part (10) by means of a heatable expanding hose (19) onto the inner surface of the mold (14).

4. A method according to one of the preceding claims, **characterized in that** the molded part (10) is treated with a releasing agent at least in the region of its inner surface before being applied to the damaged bead (5).

5. A molded part for performing the method according to one of the preceding claims, **characterized in that** it is implemented as a continuous ring having an approximately V-shaped cross-section which encloses the bead (5).

6. A molded part according to claim 5, **characterized in that** it is made of elastomeric material.

7. A molded part according to claim 6, **characterized in that** it is implemented as a vulcanization preform made of a rubber mixture at least partially comprising butyl rubber and/or silicone rubber, which is produced using a tire with an undamaged bead (5) as the matrix.

8. A molded part according to one of the preceding claims 5 to 7, **characterized in that** for cold retreading it has a contour (r) rounded outward in the transition region of both of its legs.

9. A molded part according to one of the preceding claims 5 to 7, **characterized in that** for hot retreading it has an outer contour bent at most to a right angle (20) in the transition region of both of its legs.

10. A molded part according to claim 9, **characterized in that** for hot retreading it has an outer leg, shorter than the inner leg, which has an outer contour tailored to the inner contour of the bead ring (16) of the mold (14) and ends in the region of the bead heel (6).

## Revendications

1. Procédé pour rechapage de pneus de véhicules, qui sont endommagés dans le secteur d'au moins un bombement (5) pouvant être installé de manière hermétique sur une jante adaptée et dont la surface de roulement est usée, par réparation de la détérioration du bombement (9) et rénovation circulaire de la surface de roulement, **caractérisé en ce que**, pour la rénovation circulaire de la surface de roulement et la réparation de la détérioration du bombement (9), un procédé commun de vulcanisation est appliqué, l'emplacement abîmé et usagé du bombement (5) étant recouvert d'un mélange de caoutchouc et une pièce moulée (10) entourant le bombement (5), s'étendant sur au moins une partie de son volume et qui présente un contour intérieur adapté individuellement à la section transversale de la partie de bombement non endommagée (5) étant ensuite déposée sur celui-ci, et le pneu recouvert en surface d'une nouvelle bande de roulement (3) avec la pièce moulée (10) appliquée sur le bombement étant ensuite introduit pour vulcanisation dans un dispositif récepteur (12 ; 14, 19) qui s'applique sur les pneus et la pièce moulée (10) et fixe cette dernière.

2. Procédé selon la revendication 1, **caractérisé en ce que** pour la rénovation circulaire à froid, par laquelle une bande de roulement (3) pré-vulcanisée est vulcanisée sur le pneu préparé, le pneu, sur lequel sont appliquées la bande de roulement (3) et la pièce moulée (10), est aspiré dans une enveloppe (12), dont l'espace intérieur est en dépression, enveloppé et inséré ainsi dans un autoclave.

3. Procédé selon la revendication 1, **caractérisé en ce que** pour la rénovation circulaire à chaud, dans laquelle on utilise une bande de roulement brute, qui est profilée par pressage sur un moule (14), le pneu recouvert par la bande de roulement portant la pièce moulée (10) est inséré dans le moule pouvant être chauffé (14) et est compressé avec la pièce moulée (10) au moyen d'un tuyau gonflé (19) sur la surface supérieure du moule (14).

4. Procédé selon une des revendications précédentes, **caractérisé en ce que** la pièce moulée (10), avant son application sur le bombement abîmé (5) est traitée, au moins dans le secteur de sa surface supérieure, avec un produit de séparation de moule.

5. Pièce moulée pour la réalisation du procédé selon une des revendications précédentes, **caractérisé en ce qu'**elle est conçue comme un anneau périphérique qui présente une section transversale approximativement en V englobant le renflement (5).

6. Pièce moulée selon la revendication 5, **caractérisée en ce qu'**elle est en matière de caoutchouc élastique.

7. Pièce moulée selon la revendication 6, **caractérisée en ce qu'**elle est constituée d'une ébauche vulcanisée fabriquée au moins partiellement de préférence dans un mélange de caoutchouc butylique et/ou siliconé, qui est fabriquée en utilisant un pneu à renflement (5) non abîmé comme matrice.

8. Pièce moulée selon une des revendications 5 à 7, **caractérisée en ce qu'**elle présente, pour la rénovation circulaire à froid, un contour (r) arrondi à l'extérieur dans la zone de transition de ses deux branches.

9. Pièce moulée selon une des revendications 5 à 7, **caractérisée en ce qu'**elle présente, pour la rénovation circulaire à chaud dans la zone de transition de ses deux branches, un contour extérieur coudé à angle droit (20) au maximum.

10. Pièce moulée selon la revendication 9, **caractérisée en ce qu'**elle présente, pour la rénovation circulaire à chaud, une branche extérieure raccourcie par rapport à la branche intérieure, qui présente un contour extérieur adapté au contour intérieur du cercle de bombement (16) du moule (14) et se termine dans la zone du talon du bombement (6).
